# EUROPEAN PATENT APPLICATION

(11) **EP 0 805 019 A1**
(43) Date of publication of application: **05.11.1997**
(21) Application number: 97106640.2
(22) Date of filing: 22.04.1997
(51) Int. Cl.: B29D 12/02, B29C 69/02, B41M 1/30, B44C 3/04, B44F 7/00

(54) **Method of manufacturing a multicolored molded plastic product for eyeglasses having a stereographic pattern**

(30) Priority: 30.04.1996 JP 134360/96
(71) Applicant: Horikawa Co., Ltd., Fukui-ken 916 (JP)
(72) Inventor: Arakawa, Tatsuei, c/o Horikawa Co., Ltd., Sabae-shi, Fukui-ken 916 (JP)
(74) Representative: Goddar, Heinz J., Dr.

(57) **Abstract**

A method of manufacturing a multicolored molded plastic product (10) for eyeglasses having a stereographic pattern comprising steps of preparing a mold having an upper mold (1) and a lower mold (2), the upper mold (1) having concave portions (3a, 3b, 3c) at suitable places inside a cavity thereof, filling the mold with a transparent resin material (R) having a scaly pigment (L) so as to permit the scaly pigment (L) to be subject to leafing, the leafing of the scaly pigment being deflected in the concave portions (3a, 3b, 3c), simultaneously obtaining a molded plastic product (10) made of the transparent material having the scaly pigment forming the deflected leafing, the molded plastic product (10) having protrusions (11a, 11b, 11c) formed in the concave portions (3a, 3b, 3c), cutting the protrusions (11a, 11b, 11c) of the molded plastic product (10) so as to expose the deflected leafing of the scaly pigment (L) on cut surfaces (11A, 11B, 11C) of the protrusions (11a, 11b, 11c) in cross sections, thereby producing a stereographic pattern, coloring cut surfaces (11A, 11B, 11C) in a pattern corresponding to the stereographic pattern by pressing and sticking a dyestuff (I) onto the cut surfaces (11A, 11B, 11C) exposed in cross sections, and infiltrating the dyestuff (I) under the cut surfaces (11A, 11B, 11C) by heating the colored cut surfaces (11A, 11B, 11C).

## Description

The present invention relates to a method of manufacturing a multicolored molded plastic product having a stereographic pattern suitable for a frame of eyeglasses made of synthetic resin.

Conventionally, when a frame of eyeglasses made of synthetic resin is decorated in its outer appearance with a stereographic pattern, it has been commonly employed a method of applying an embossing process to the surface of a plastic part constituting the frame of eyeglasses, or sculpturing the same surface by laser machining or a cutting operation.

Products having such a stereographic pattern produced by these methods are likely to be stained with oil dirt or dust collected in irregularities defined therein, causing a problem that they are shabby in appearance and are sanitarily undesirable due to mold grown in the irregularities.

There has been known a method of producing a stereographic pattern on plastic tiles or synthetic resin sheets (floor materials, encrusted wall materials, etc.) by inlaying particles or pieces of colored resins in a substrate material thereof and bonding a transparent resin sheet onto the substrate material to incorporate therewith by hot pressing.

In these conventional methods, products can be mass-produced only in a sheet shape or a plate shape or a plate-like shape with only a scattered-figure pattern lacking in variety, which made it substantially impossible to practically apply them to synthetic resin parts for eyeglasses which require delicate and fine patterning.

The applicant has already proposed a method of manufacturing encrusted synthetic resin parts for a frame of eyeglasses so as to produce a stereographic pattern, particularly in the field of eyeglasses which put emphasis on fashions and designs, as disclosed in JP-B No. 8-18377.

In this method, it is possible to efficiently manufacture the parts of the frame of eyeglasses made of synthetic resin having a deep stereographic pattern on the surface thereof.

The present invention is intended to further improve aesthetic beauty of plastic parts such as a frame of eyeglasses made of synthetic resin having a stereographic pattern set forth above.

More in detail, it is an object of the invention to provide a method of manufacturing multicolored plastic parts for eyeglasses capable of producing an excellent deep stereographic pattern so as to meet the demand of such kinds of synthetic resin parts.

Thereupon, the inventors of the present application have found it possible to produce a pattern having an excellent tone of colors in addition to its three-dimensional effect by coloring the plastic parts having a stereographic pattern in a particular way as a result of earnest study for these subjects, and completed the present invention based on the finding.

To achieve the above objects, it is a first aspect of the present invention to provide a method of manufacturing a multicolored molded plastic product for eyeglasses having a stereographic pattern comprising steps of preparing a mold having an upper mold and a lower mold, the upper mold having concave portions at suitable places inside a cavity thereof, filling the mold with a transparent resin material having a scaly pigment so as to permit the scaly pigment to be subject to leafing, the leafing of the scaly pigment being deflected in the concave portions, simultaneously obtaining a molded plastic product made of the transparent material having the scaly pigment forming the deflected leafing, the molded plastic product having protrusions formed in the concave portions, cutting the protrusions of the molded plastic product so as to expose the deflected leafing of the scaly pigment on cut surfaces of the protrusions in cross sections, thereby producing a stereographic pattern, coloring cut surfaces in a pattern corresponding to the stereographic pattern by pressing and sticking a dyestuff onto the cut surfaces exposed in cross sections, and infiltrating the dyestuff under the cut surfaces by heating the colored cut surfaces.

It is a second aspect of the present invention to provide a method of manufacturing a multicolored molded plastic product for eyeglasses having a stereographic pattern comprising steps of preparing a mold having an upper mold and a lower mold, the upper mold having concave portions at suitable places inside a cavity thereof, filling the mold with a transparent resin material having a scaly pigment so as to permit the scaly pigment to be subject to leafing, the leafing of the scaly pigment being deflected in the concave portions, simultaneously obtaining a molded plastic product made of the transparent material having the scaly pigment forming the deflected leafing, the molded plastic product having protrusions formed in the concave portions, cutting the protrusions of the molded plastic product so as to expose the deflected leafing of the scaly pigment on cut surfaces of the protrusions in cross sections, thereby producing a stereographic pattern, flattening the cut surfaces having the deflected leafing of the scaly pigment which is exposed in cross sections, coloring cut surfaces in a pattern corresponding to the stereographic pattern by pressing and sticking a dyestuff onto the cut surfaces exposed in cross sections, and infiltrating the dyestuff under the cut surfaces by heating the colored cut surfaces.

It is a third aspect of the present invention to provide a method of manufacturing a multicolored molded plastic product for eyeglasses having a stereographic pattern comprising steps of preparing a mold having an upper mold and a lower mold, the upper mold having concave portions at suitable places inside a cavity thereof, filling the mold with a transparent resin material having a scaly pigment so as to permit the scaly pigment to be subject to leafing, the leafing of the scaly pigment being deflected in the concave portions, simultaneously obtaining a molded plastic product made of the transparent material having the scaly pigment forming the deflected leafing, the molded plastic product having protrusions formed in the concave portions, cutting the protrusions of the molded plastic product so as to expose the deflected leafing of the scaly pigment on cut surfaces of the protrusions in cross sections, thereby producing a stereographic pattern, flattening the cut surfaces having the deflected leafing of the scaly pigment which is exposed in cross sections, coloring cut surfaces in a pattern corresponding to the stereographic pattern by pressing and sticking a dyestuff onto the cut surfaces exposed in cross sections, and infiltrating the dyestuff under the cut surfaces by heating the colored cut surfaces, and removing the dyestuff remained on the cut surfaces.

It is a fourth aspect of the invention to provide a method of manufacturing a multicolored molded plastic product for eyeglasses having a stereographic pattern comprising steps of preparing a mold having an upper mold and a lower mold, the upper mold having concave portions at suitable places inside a cavity thereof, filling the mold with a transparent resin material having a scaly pigment so as to permit the scaly pigment to be subject to leafing, the leafing of the scaly pigment being deflected in the concave portions, simultaneously obtaining a molded plastic product made of the transparent material having the scaly pigment forming the deflected leafing, the molded plastic product having protrusions formed in the concave portions, cutting the protrusions of the molded plastic product so as to expose the deflected leafing of the scaly pigment on cut surfaces of the protrusions in cross sections, thereby producing a stereographic pattern, flattening the cut surfaces having the deflected leafing of the scaly pigment which is exposed in cross sections, coloring cut surfaces in a pattern corresponding to the stereographic pattern by pressing and sticking a dyestuff onto the cut surfaces exposed in cross sections, infiltrating the dyestuff under the cut surfaces by heating the colored cut surfaces, and removing the dyestuff remained on the cut surfaces, and coating the surface of the molded plastic product with paint.

It is a fifth aspect of the present invention to provide a method of manufacturing a multicolored molded plastic product for eyeglasses having a stereographic pattern according to second, third 01 fourth aspect of the invention, wherein the step of flattening the cut surfaces is executed by barrel finishing or buffing.

It is a sixth aspect of the present invention to provide a method of manufacturing a multicolored molded plastic product for eyeglasses having a stereographic pattern according to third and fourth aspects of the invention, wherein the step of removing the dyestuff remained on the cut surfaces is executed by barrel finishing or buffing, or by using a solvent.

It is a seventh aspect of the present invention to provide a method of manufacturing a multicolored molded plastic product for eyeglasses having a stereographic pattern according to any of the first to fourth aspects of the invention, wherein the molded plastic product is fixed to and supported by a reception table having a recess in which the molded plastic product is partly engaged in the step of coloring.

According to the present invention, the scaly pigment is partially deflected in a leafing state in convex portions of the cavity.

A stereographic pattern can be obtained by exposing the portions in the leafing state where the pigment is deflected in cross sections.

Further, molded plastic products for eyeglasses having a stereographic pattern which is excellent in three-dimensional effect and color tone can be obtained by adding colors onto the exposed surfaces in cross sections and infiltrating them.
Fig. 1 is a cross sectional view of a mold employed in the present invention;
Fig. 2 is a cross sectional view showing a leafing state inside the mold according to a preferred embodiment of the present invention;
Fig. 3 is an enlarged cross sectional view showing a leafing state of a mold according to the preferred embodiment of the present invention;
Fig. 4 is a perspective view showing an external appearance of the molded product manufactured according to the embodiment of the present invention;
Figs. 5(A) and 5(B) show cut surfaces of the molded product according to the embodiment of the present invention, in which Fig. 5 (A) shows a perspective view of the outside of the molded product, and Fig. 5 (B) shows a side view thereof;
Figs. 6 (A) to 6 (B) are views showing a part of printing steps in the pad printing method according to the embodiment of the present invention;
Figs. 7 (A) to 7 (B) show steps for manufacturing the molded product (a temple for eyeglasses) in the manufacturing order thereof;
Fig. 8 shows a temple for eyeglasses manufactured according to the embodiment of the present invention;
Fig. 9 is a view showing a part of the printing steps in the pad printing method according to the embodiment of the present invention; and
Fig. 10 is a view showing another part of the printing step in the pad printing method according to the embodiment of the present invention.

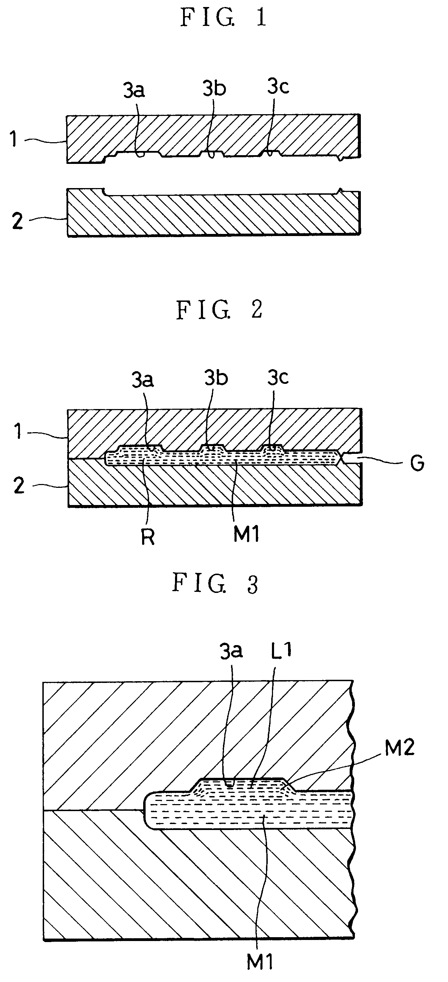

A preferred embodiment for manufacturing multicolored molded plastic products for eyeglasses having a stereographic pattern according to the present invention will be described with reference to Figs. 1 to 8.

The method according to the present invention includes at least the following main steps.
(a) A step of preparing a mold having an upper mold and a lower mold, the upper mold having concave portions at suitable places inside a cavity thereof, filling the mold with a transparent resin material having a scaly pigment so as to permit the scaly pigment to be subject to leafing, the leafing of the scaly pigment being deflected in the concave portions, and simultaneously obtaining a molded plastic product made of the transparent material having the scaly pigment forming the deflected leafing, the molded plastic product having protrusions formed in the concave portions (deflecting step).
(b) A step of cutting the protrusions of the molded plastic product so as to expose the leafing state where the scaly pigment is deflected on cut surfaces of the protrusions in cross sections, thereby producing a stereographic pattern (cutting step).
(c) A step of coloring the cut surfaces of the products in a pattern corresponding to the stereographic pattern by pressing and sticking a dyestuff onto the cut surfaces exposed in cross sections (coloring step).
(d) A step of infiltrating the dyestuff under the cut surfaces by heating the colored cut surfaces (infiltrating step).

Next, the method of manufacturing a multicolored molded plastic product for eyeglasses according to the present invention including at least the above main steps will be described in order.

Fig. 1 shows a basic typical example of a structure of a mold employed by the manufacturing method of the present invention.

The mold comprises an upper mold 1 and a lower mold 2, by which a cavity is defined for forming plastic products.

Concave portions 3a, 3b, 3c are provided inside the cavity of the upper mold 1 for forming convex portions of the molded product to project from the surface of the molded product.

Although an example wherein the three concave portions 3a, 3b, 3c are provided is described here, the number of them can be freely determined according to the stereographic pattern added to the surface of the molded plastic part.

The upper mold 1 and the lower mold 2 are coupled to each other to form the cavity and sealed up as in Fig. 2, and a synthetic resin R is injected into the cavity through an injection port G to fill the cavity.

Principally, a resin which can be subject to injection molding can be adopted as the synthetic resin R, and they are, for example, acetyl cellulose, polycarbonate, polyacryle, polyamide, PES (polyethylene sulfone), or PAS (polyacrylsulfone).

The synthetic resin R is, for example, a transparent resin material containing a scaly pigment L for permitting the scaly pigment L to be deflected in an orientational direction at the concave portions 3a, 3b, 3c of the upper mold 1.

Small pieces of mica coated with titanium oxide, or metal flakes, for example, are employed as the scaly pigment L.

Small pieces of mica coated with titanium oxide, a so called pearl pigment is the most suitable for stereographic patterning.

If the synthetic resin material R is injected into the cavity through the injection port G as shown in Fig. 2, the synthetic resin material R is subject to a leafing to form a leafing state M1 which is oriented as a whole, and particularly, the flow of the synthetic resin R is locally changed in the concave portions 3a, 3b, 3c.

By this, a leafing state M2 where the scaly pigment L is deflected in the concave portions 3a, 3b, 3c is formed (deflecting step).

Fig. 3 is an enlarged view of a part of the mold showing the oriented state of the scaly pigment L, from which the leafing state M2 where the pigment is deflected is apparent.

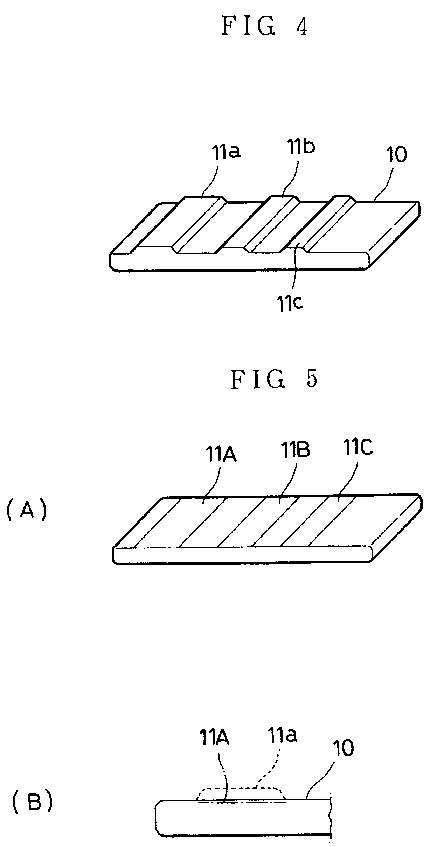

Next, Fig. 4 shows a molded product 10 formed by injection molding using the upper and lower molds 1 and 2 as described above.

The molded product 10 has concave portions 11a, 11b, 11c protruding from the surface of the molded product 10 corresponding to the concave portions 3a, 3b, 3c of the mold.

A leafing state is formed inside these convex portions 11a, 11b, 11c in which the pigment is deflected, as described above.

As shown in Fig. 5 (A) and (B), the leafing state M2 in which the scaly pigment L is deflected appears on cut surfaces 11A, 11B, 11C after these convex portions 11a, 11b, 11c are cut (cutting step).

The cut surfaces 11A, 11B, 11C have a complicated reflection characteristic which is delicately different from that of other parts depending on the change of the direction of orientation in which the scaly pigment L is deflected.

As a result, an optical stereographic pattern is produced on the cut surfaces 11A, 11B, 11C.

The cut surfaces 11A, 11B, 11C are not necessarily flattened after the leafing state M2 is exposed.

Therefore, the cut surfaces 11A, 11B, 11C are further flattened to the utmost, thereby making it easy to apply correct coloring.

In this case, they can be flattened by polishing. Barrel polishing or buffing is desirable for such polishing (flattening step).

Next, the molded product 10 is colored by pressing and sticking dyestuff on the cut surfaces 11A, 11B, 11C thereof (coloring step).

A printing method using a pad is desirable in this coloring process.

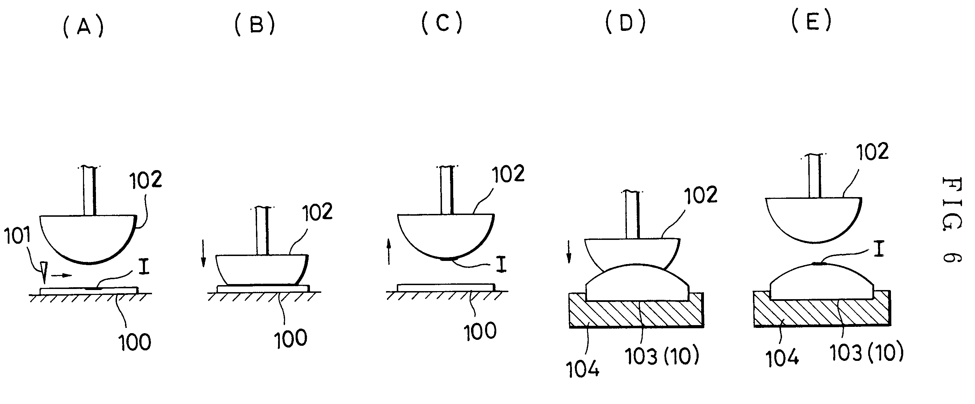

Figs. 6 (A) to (E) show the printing method in the order of main printing step making use of a pad adaptable for the present invention.

Firstly, a predetermined dyestuff I is poured into a concave plate 100, and then extra dyestuff is wiped off with a doctor knife 101 or the like.

The dyestuff I is applied onto the concave plate 100 in a pattern corresponding to the pattern produced on the cut surfaces in the method of the present invention.

Next, a pad 102 made of silicon and having elasticity is lowered downwardly on the dyestuff I to press the concave plate 100 as shown in Fig. 6 (B).

The pad 102 is raised next and then the dyestuff I is transferred to the surface of the pad 102 as shown in Fig. 6 (C).

The pad 102 to which the dyestuff I is transferred is then pressed at a given pressure on the surface of the material 103 (molded product 10) to be printed as shown in Fig. 6 (D).

When the pad 102 is raised again, the dyestuff I is transferred to and printed on the material 103 as shown in Fig. 6 (E).

Thereby, the graphic pattern produced on the surface of the molded product 10, i.e., the printed material 103 can be colored in a desired color tone.

Hardness of the pad to be adopted is preferable in the range from 40 to 70.

Namely, it is impossible to perform clear printing with a pad of hardness of under 40, and it is difficult to perform correct transfer onto the molded product 10 because a dyestuff hardly sinks into the curved portions of the molded product 10 with a pad of hardness of above 70.

In this case, it is important to eliminate a slip, i.e. discrepancy in position between the cut surfaces of the molded product and the pad 10 so as to apply a sharp pattern onto the molded product.

Therefore, according to the present invention, the molded product must be fixed to and supported by a special reception table for transferring and printing the pattern onto the molded product.

That is, a reception table 104 having a recessed portion corresponding to the shape of the molded product must be used as this receiving member, wherein the molded product is engaged into the recessed portion of the reception table 104 so as to be fixedly supported by the recessed portion.

Therefore, the molded product can be correctly positioned, thereby permitting a color pattern to be accurately transferred onto the graphic pattern already formed on the cut surfaces.

The molded product is liable to be easily injured since they are made of a plastic material, and consequently, the reception table 104 must be made of a soft resin material, e.g., two liquid curing resin such as putty silicon or putty epoxy.

In this manner, molded plastic products producing an excellent color pattern as well as a stereographic pattern can be obtained by adding colors corresponding to the stereographic pattern already appeared on the cut surfaces in the leafing state of the molded product 10.

Subsequently, the cut surfaces having the stereographic colored pattern thereon are heated for slowly infiltrating the dyestuff under the cut surfaces (infiltrating step).

A temperature at this time is in the range of 80 to 120 °C in view of infiltration property of the dyestuff. At a temperature of 80 °C or less, the dyestuff is not infiltrated sufficiently and at a temperature of 120 °C or more the surface of the molded product may be deformed.

Heating time ranges from twenty to seventy minutes, although it is varied depending on the temperature. If the cut surfaces are heated for twenty minutes or less, the dyestuff is infiltrated shallowly to deteriorate the corrosion resistance, whereas if they are heated for seventy minutes or more, the dyestuff is infiltrated and spreads excessively in the lateral direction to cause a blur of the pattern.

After the infiltration of the dyestuff, the dyestuff containing binders and the like remaining on the cut surfaces is removed (step of removing the dyestuff or the like).

This removing process is a preceding step for surely coating the surface in the next step, and concretely, it is executed by barrel polishing or buffing. Solvents may be used for the removal depending on the material.

The entire surface of the molded product including the cut surfaces is coated with a transparent resin after the binders, the dyestuff and the like are removed from the surface of the molded product (coating step).

A transparent coating is mainly adopted for such coating so that the colored stereographic pattern produced on the cut surfaces might not be blurred.

With the aforementioned processes, a molded plastic product having the multicolored stereographic pattern can be manufactured.

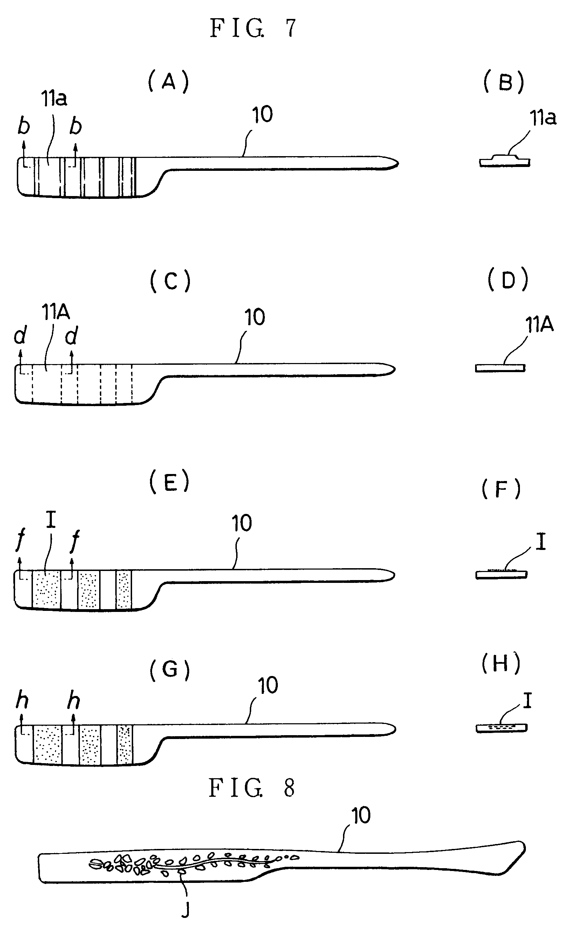

Figs. 7 (A) to 7 (H) shows steps for manufacturing the molded products, namely, a temple of eyeglasses.
1. Fig. 7 (A) shows a molded product obtained through the deflecting step, and Fig. 7 (B) is a cross section taken along the line b-b.
2. Fig. 7 (C) shows a molded product obtained through the cutting step, and Fig. 7 (D) is a cross section taken along the line d-d.
3. Fig. 7 (E) shows a molded product obtained through the coloring step, and Fig. 7 (F) is a cross section taken along the line f-f.
4. Fig. 7(G) shows a molded product obtained through the infiltrating step, and Fig. 7(H) is a cross section taken along the line h -h.

According to the present invention, the above four steps, i.e., the deflecting step, the cutting step, the coloring step, and the infiltrating step are necessary. However, the flattening step executed after the cutting step, the step of removing the dyestuff executed after the infiltrating step, and the coating step executed after the step of removing the dyestuff can be selectively added.

Multicolored molded plastic products having stereographic patterns of higher quality can be manufactured by adding the above respective steps to the main four steps.

More concrete embodiments according to the present invention will be described in detail.

### First Example:

A transparent nylon resin which is a synthetic resin material R is used as a material of a molded product. Titanium-oxide coated mica (< 0.02 mm; a kind of pearl pigment) is used for the scaly pigment L which is blended with the transparent nylon resin.

The containing ratio of the titanium-oxide-coated mica with respect to the transparent nylon resin is set to be 0.5 weight %.

A molded plastic product for a frame of eyeglasses is produced by injection molding at a resin temperature of 230°C by using the predetermined mold (see Fig. 1).

Molded convex portions (height: 0.4 mm) protruded from the surface of the molded product are cut by using a milling machine.

Thereafter, the surface is further polished and lustered by barrel polishing in two stages (rough, medium).

Next, the exposed cut surfaces of the molded product are colored in a pattern corresponding to that of the pattern on the cut surfaces.

The pad printing method described above is applied to this step.

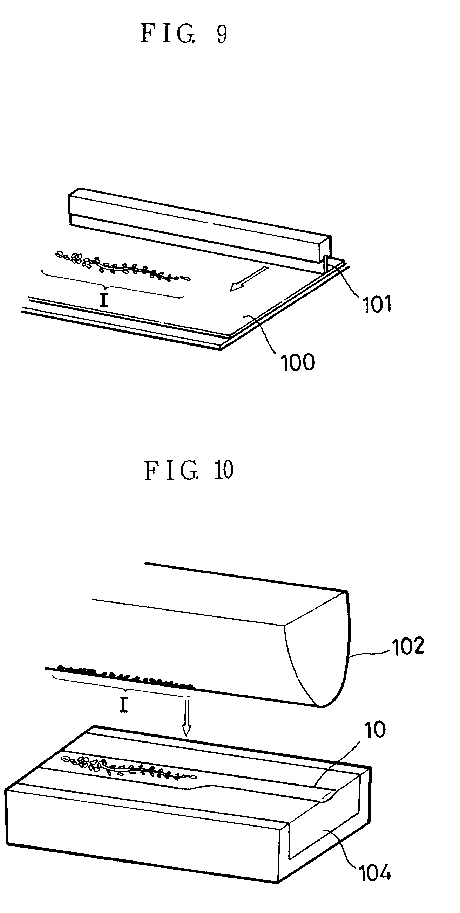

More concretely, ink I containing disperse dye is poured into the concave plate 100 having a pattern corresponding to that produced on the cut surfaces, and extra ink I is wiped away by a doctor knife 101 as shown in Fig. 9.

Thereafter, the ink I is stuck to the pad 102, and the pad 102 is pressed on and stuck to the molded product 10 which is fixed to and supported by a reception table 104 so that the ink I is transferred to the molded product 10 (see Fig. 10).

After the ink I is transferred to and printed on the cut surfaces, the ink was baked for 40 minute suitably at a resin temperature of 180°C.

Thereby, the ink I is infiltrated under the cut surfaces of the molded product 10.

The extra ink remaining on the surface of the molded product 10 is removed by barrel polishing after it is baked.

Further, the surface of the molded product 10 is coated with two-liquid curing type urethane paint.

The coating was carried out for 2 hours at a temperature of 50°C.

In this embodiment, an excellent stereographic pattern having a littering silky luster can be produced on the cut surfaces of the molded product 10 since the ink contains pearl pigment.

After the cut surfaces were colored with the ink I, they are embossed with the littering silky luster, thereby enhancing a three-dimensional effect to thereby produce a particular excellent tone of the pattern J (see Fig. 8).

### Second Example:

Acetyl cellulose of a cellulose based resin is employed as a material of a molded product, and aluminum flakes and black pigment are employed as the scaly pigment blended with the acetyl cellulose (a product by the name of "Heat Resistant Black" made by Mitsubishi Material K.K.).

The containing ratio of the scaly pigment L with respect to the acetyl cellulose is 0.05 weight % for aluminum flakes, and 0.01 weight % for the black pigment.

A molded plastic product for a frame of eyeglasses is manufactured by injection molding at a resin temperature of 180°C using the mold.

Molded convex portion (height: 0.4 mm) protruded from the surface of the molded plastic product are cut by using a milling machine.

Thereafter, the cut surface is further polished and lustered by barrel polishing in three stages (rough, medium, fine).

Further, coloring and infiltrating processes were carried out in the pad printing method employed in the first example.

As a result, an excellent monochromatic sharp stereographic pattern could be obtained.

### Third Example:

A transparent nylon resin is used as a material of a molded product. Titanium-oxide-coated mica (<0.02 mm; another name is called as pearl pigment) was employed as the scaly pigment L blended with the transparent nylon resin.

The containing ratio of the titanium-oxide-coated mica with respect to the transparent nylon resin is 0.5 weight %.

A molded plastic product 10 for a frame of eyeglasses is manufactured by injection molding at a resin temperature of 190°C by using the mold.

Molded convex portions (height: 0.5 mm) protruded from the surface of the molded product are cut by using a milling machine.

Subsequently, the cut surface was printed with transfer ink red containing pigment (Celicole Ink made by Imperial Ink K. K.) in a pad printing method.

Further, the cut surface was further printed with transfer ink red blue (Celicole Ink made by Imperial Ink K.K.).

Thereafter, the ink was baked for 20 minutes at a temperature of 80°C. After this baking, ink binders remaining on the molded product 10 were removed and cleaned using alcohol as a solvent.

As a result, an excellent sharp stereographic pattern in two colors could be obtained.

In this embodiment, a silk printing method was also carried out instead of the pad printing.

In this silk printing method, the pattern was printed on a paper with transfening ink red (Celicole Ink made by Imperial Ink K.K.).

After molded convex portions (height: 0.5 mm) formed to project from the surface of a molded plastic product for the frame of eyeglasses were cut by using a milling machine, baking was applied to the surface at a temperature of 100°C for about 10 minutes in a state where the transferring ink red is pressed and stuck onto the surface of the molded product.

As a result, a stereographic pattern in two colors could be obtained in the same manner.

Although the present invention has been described in detail above, it is needless to say that the present invention is not limited to the above embodiment but can be variously modified without departing from the essence of the present invention.

The present invention can be effectively applicable, for example, to other plastic parts of this kind, although in the above embodiments, a manufacturing method of a molded plastic product for the frame of eyeglasses was described in particular.

The features disclosed in the foregoing description, in the claims and/or in the accompanying drawings may, both separately and in any combination thereof, be material for realising the invention in diverse forms thereof.

## Claims

1. A method of manufacturing a multicolored molded plastic product (10) for eyeglasses having a stereographic pattern comprising steps of:
preparing a mold having an upper mold (1) and a lower mold (2), the upper mold (1) having concave portions (3a, 3b, 3c) at suitable places inside a cavity thereof;
filling the mold with a transparent resin material (R) having a scaly pigment (L) so as to permit the scaly pigment (L) to be subject to leafing, the leafing of the scaly pigment being deflected in the concave portions (3a, 3b, 3c);
simultaneously obtaining a molded plastic product (10) made of the transparent material (R) having the scaly pigment forming the deflected leafing, the molded plastic product (10) having protrusions (11a, 11b, 11c) formed in the concave portions (3a, 3b, 3c);
cutting the protrusions (11a, 11b, 11c) of the molded plastic product (10) so as to expose the deflected leafing of the scaly pigment (L) on cut surfaces (11A, 11B, 11C) of the protrusions (11a, 11b, 11c) in cross sections, thereby producing a stereographic pattern;
coloring cut surfaces (11A, 11B, 11C) in a pattern corresponding to the stereographic pattern by pressing and sticking a dyestuff (I) onto the cut surfaces (11A, 11B, 11C) exposed in cross sections; and
infiltrating the dyestuff (I) under the cut surfaces (11A, 11B, 11C) by heating the colored cut surfaces (11A, 11B, 11C).

2. A method of manufacturing a multicolored molded plastic product (10) for eyeglasses having a stereographic pattern comprising steps of:
preparing a mold having an upper mold (1) and a lower mold (2), the upper mold (1) having concave portions (3a, 3b, 3c) at suitable places inside a cavity thereof;
filling the mold with a transparent resin material (R) having a scaly pigment (L) so as to permit the scaly pigment (L) to be subject to leafing, the leafing of the scaly pigment being deflected in the concave portions (3a, 3b, 3c);
simultaneously obtaining a molded plastic product (10) made of the transparent material having the scaly pigment forming the deflected leafing, the molded plastic product (10) having protrusions (11a, 11b, 11c) formed in the concave portions (3a, 3b, 3c);
cutting the protrusions (11a, 11b, 11c) of the molded plastic product (10) so as to expose the deflected leafing of the scaly pigment (L) on cut surfaces (11A, 11B, 11C) of the protrusions (11a, 11b, 11c) in cross sections, thereby producing a stereographic pattern;
flattening the cut surfaces (11A, 11B, 11C) having the deflected leafing of the scaly pigment (L) which is exposed in cross sections;
coloring surfaces (11A, 11B, 11C) in a pattern corresponding to the stereographic pattern by pressing and sticking a dyestuff (I) onto the cut surfaces (11A, 11B, 11C) exposed in cross sections; and
infiltrating the dyestuff (I) under the cut surfaces (11A, 11B, 11C) by heating the colored cut surfaces (11A, 11B, 11C).

3. A method of manufacturing a multicolored molded plastic product (10) for eyeglasses having a stereographic pattern comprising steps of:
preparing a mold having an upper mold (1) and a lower mold (2), the upper mold (1) having concave portions (3a, 3b, 3c) at suitable places inside a cavity thereof;
filling the mold with a transparent resin material (R) having a scaly pigment (L) so as to permit the scaly pigment (L) to be subject to leafing, the leafing of the scaly pigment being deflected in the concave portions (3a, 3b, 3c);
simultaneously obtaining a molded plastic product (10) made of the transparent material having the scaly pigment forming the deflected leafing, the molded plastic product (10) having protrusions (11a, 11b, 11c) formed in the concave portions (3a, 3b, 3c);
cutting the protrusions (11a, 11b, 11c) of the molded plastic product (10) so as to expose the deflected leafing of the scaly pigment (L) on cut surfaces (11A, 11B, 11C) of the protrusions (11a, 11b, 11c) in cross sections, thereby producing a stereographic pattern;
flattening the cut surfaces (11A, 11B, 11C) having the deflected leafing of the scaly pigment (L) which is exposed in cross sections;
coloring cut surfaces (11A, 11B, 11C) in a pattern corresponding to the stereographic pattern by pressing and sticking a dyestuff (I) onto the cut surfaces (11A, 11B, 11C) exposed in cross sections; and
infiltrating the dyestuff (I) under the cut surfaces (11A, 11B, 11C) by heating the colored cut surfaces (11A, 11B, 11C), and removing the dyestuff (I) remained on the cut surfaces (11A, 11B, 11C).

4. A method of manufacturing a multicolored molded plastic product (10) for eyeglasses having a stereographic pattern comprising steps of:
preparing a mold having an upper mold (1) and a lower mold (2), the upper mold (1) having concave portions (3a, 3b, 3c) at suitable places inside a cavity thereof,
filling the mold with a transparent resin material (R) having a scaly pigment (L) so as to permit the scaly pigment (L) to be subject to leafing, the leafing of the scaly pigment being deflected in the concave portions (3a, 3b, 3c);
simultaneously obtaining a molded plastic product (10) made of the transparent material having the scaly pigment forming the deflected leafing, the molded plastic product (10) having protrusions (11a, 11b, 11c) formed in the concave portions (3a, 3b, 3c);
cutting the protrusions (11a, 11b, 11c) of the molded plastic product (10) so as to expose the deflected leafing of the scaly pigment (L) on cut surfaces (11A, 11B, 11C) of the protrusions (11a, 11b, 11c) in cross sections, thereby producing a stereographic pattern;
flattening the cut surfaces (11A, 11B, 11C) having the deflected leafing of the scaly pigment (L) which is exposed in cross sections;
coloring cut surfaces (11A, 11B, 11C) in a pattern corresponding to the stereographic pattern by pressing and sticking a dyestuff (I) onto the cut surfaces (11A, 11B, 11C) exposed in cross sections;
infiltrating the dyestuff (I) under the cut surfaces (11A, 11B, 11C) by heating the colored cut surfaces (11A, 11B, 11C), and removing the dyestuff (I) remained on the cut surfaces (11A, 11B, 11C); and
coating the surface of the molded plastic product (10) with paint.

5. The method of manufacturing a multicolored molded plastic product (10) for eyeglasses having a stereographic pattern according to Claims 2, 3, or 4, wherein the step of flattening the cut surfaces (11A, 11B, 11C) is executed by barrel finishing or buffing.

6. The method of manufacturing a multicolored molded plastic product (10) for eyeglasses having a stereographic pattern according to Claim 3, or 4, wherein the step of removing the dyestuff (I) remained on the cut surfaces (11A, 11B, 11C) is executed by barrel finishing or buffing, or by using a solvent.

7. The method of manufacturing a multicolored molded plastic product (10) for eyeglasses having a stereographic pattern according to any one of Claims 1 to 4, wherein the molded plastic product (10) is fixed to and supported by a reception table (104) having a recess in which the molded plastic product (10) is partly engaged in the step of coloring.
